Europäisches Patentamt

European Patent Office

Office européen des brevets

(11) Publication number:

**0 326 194**
**A1**

## (12) EUROPEAN PATENT APPLICATION

(21) Application number: 89200002.7

(22) Date of filing: 02.01.89

(51) Int. Cl.⁴: **G02C 5/22** , **E05D 11/10**

(30) Priority: 20.01.88 IT 1913688

(43) Date of publication of application: .
02.08.89 Bulletin 89/31

(84) Designated Contracting States:
AT BE CH DE ES FR GB GR LI LU NL SE

(71) Applicant: **TUPPINI BIGIOTTERIE S.r.l.**
**Via Albere 87/A**
**I-37138 Verona(IT)**

(72) Inventor: **Tuppini, Remigio**
**Via Sottoriva 15**
**I-37121 Verona(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Articulation device applicable between two separate elements.**

(57) An articulation device (11) applicable between two separate elements (12), which can be shifted relatively to each other, by normally rotating from an aligned position in which they form an angle of 180°, limit stop elements being provided, to such a rotated position as to form an angle smaller than 180°, wherein a couple of hole-pin (17, 20, 21, 22) couplings provided on a link element interposed between them makes it possible the mutual rotation to take place over angle values of more than 180°, with one of said hole-pin couplings enabling a shift movement to take place against an elastic means (25).

Fig.1

EP 0 326 194 A1

## ARTICULATION DEVICE APPLICABLE BETWEEN TWO SEPARATE ELEMENTS

The present invention relates to an articulation device applicable between two separate elements.

It is known to install, between two separate elements, such as, e.g., coupling portions of a spectacles frame and of side ear-pieces of the same spectacles, an articulation such as to enable the ear-pieces to be moved from their position of spectacles use, to the position in which the spectacles have their ear-pieces closed on each other. In some cases, such an articulation is furthermore provided with a device which enables the so connected elements to rotate relatively to each other over an additional angle beyond 180°, in such a way that the spectacles, once that are positioned on the user's face, fit the configuration of said user's face to a greater extent, remaining stably positioned, or even can be positioned more easily on the same user's face.

Such devices are realized with helical springs, which act in traction mode or in compression mode, thus occupying a considerably large overall volume, and requiring as well a not very easy positioning.

Similar devices are used as well, e.g., in the hinges for furniture, wherein a supplementary rotation is required, with an increased opening of the door relatively to the piece of furniture, in order to make it possible the insertion opening of the piece of furniture to be totally exploited, or in order to damp possible over-oscillations of the door. In this case too, as in case of the above cited spectacles frames, complex devices are used, which are equipped with compression and/or traction springs hanging at their ends, and acting through tie-rods and/or struts which, besides being not completely reliable, are expensive as regards both their realization and application.

A purpose of the present invention is to provide an articulation device which operates in the above exposed way, following a rotation stroke to be reached, which is larger than 180°, even in the presence of limit stops, which should limit such a rotation to the said value of 180°.

Another purpose is to have a stable positioning of the articulation device in correspondence of predetermined angular openings.

A further purpose is to be able to realize such a device with a limited cost, and of being able to position it on separate elements by means of a simple and rapid procedure.

These and still other purposes according to the present invention are achieved by providing an articulation device applicable between two separate elements capable of being shifted relatively to each other from a position thereof in which, aligned to each other, they form an angle of 180°, to a position in which they are rotated relatively to, and approached to, each other, to form an angle smaller than 180°, characterized in that it comprises two body positions which can be affixed onto the ends of said two separate elements, with said two body portions being constrainable by means of two hole-pin couplings to a link element interposed between them, and being provided with stop portions which prevent them from freely rotating relatively to each other over an angle larger than 180°, with said link element being provided, on one hand, with an only-rotational movement relatively to a first coupling of said two couplinga, and, on the other hand, with a movement of translation on a plane perpendicular to a second coupling of said two couplings, such as to make it possible a rotation of said body portions relatively to each other to take place over an angle larger than 180°, with said translational movement being counteracted by an elastic means positioned inside a hole or a seat which is provided in at least said link element, and inside which seat a pin of said second hole-pin coupling can slide during said translational movement.

The characteristics and advantages of an articulation device according to the present invention will be better understood from the following exemplifying, non-limitative disclosure thereof, referred to the hereto attached schematic drawings, in which:

Figure 1 shows a partially sectional elevation view of an articulation device according to the invention,

Figure 2 shows a partially sectional top view of the articulation device of Figure 1,

Figure 3 shows a sectional view similar to that of Figure 1 showing a different operating position of the device,

Figure 4 shows a schematic side, elevation view of a further form of practical embodiment of the articulation device, in which a second operating position of the same device is shown by the chain-line,

Figure 5 shows an elevation view of a further form of practical embodiment of an articulation device according to the present invention, and

Figure 6 shows a partially sectional top view of the articulation device of Figure 5.

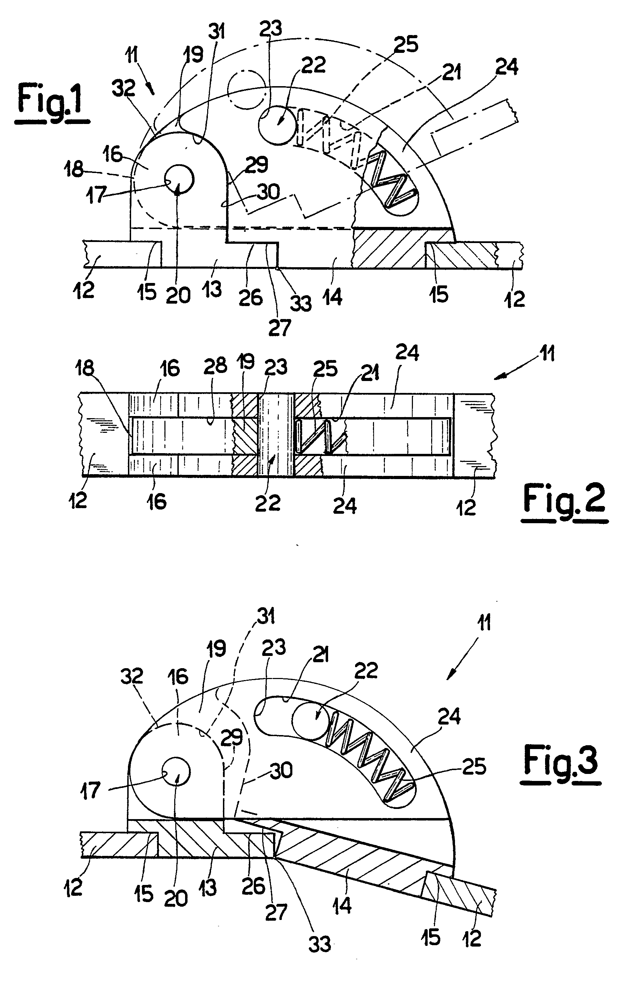

Referring to Figures 1, 2 and 3, an articulation device according to the present invention is generally indicated by the reference numeral 11, and can be applied to separate elements 12, which, in the instant example, are represented as rods, and are partially shown.

Such separate elements 12 must result movable relatively to each other as regards their mutual angular position, and respectively are, e.g., portions extending from a spectacles frame and portions of an ear-piece of said spectacles frame (not shown). In fact, in general, said separate elements 12 must be capable of being moved from a position in which they are aligned relatively to each other and form an angle of 180°, as shown by the solid line in Figure 1, to a position in which they are rotated relatively to, and are approached to, each other, to form an angle smaller than 180°, as shown by the chain in Figure 1.

The articulation device 11 according to the present invention comprises two body portions, indicated by the reference numerals 13 and 14, which can be affixed to the ends of said two separate elements 12, e.g., by means of the junction of recessed seats 15 provided in both body portions 13 and 14.

In the depicted example, the first body portion 13 is constituted by a first couple of side flanges 16, each provided with a bore 17 provided along one single axis perpendicular to both said flanges 16. The recessed opening 18 defined between said two flanges 16 is capable of receiving a link element, indicated by the reference numeral 19, having a cylinder-segment-shape, and provided as well with a bore 17 aligned and coaxial with the relevant bores 17 provided in the flanges 16. Inside said three bores 17 a pin 20 is housed, so as to provide, together with said bores, a first hole-pin coupling which only allows a relative rotation movement of both body portions 13, 14, along an angle smaller than 180° (shown by chain in figure 1).

The link element 19 is furthermore provided with a slot 21 having, e.g., a curved shape having the same curvature as of the outer outline of the cylinder segment; inside said slot 21 a second pin 22 enters, which is positioned inside bores 23 which are provided in a second couple of flanges 24, which make part of the body portion 14, and which receive, inside an opening 28 defined between them, the same link element.

Inside the slot 21, an elastic element, such as a helical spring 25, is installed, which counteracts the movement of the link element 19 relatively to the body portion 14, keeping the same link element perfectly inside the opening 28 defined by the second couple of flanges 24.

Said two body portions 13 and 14 are provided with complementary step-shaped stop portions 26 and 27, which engage on each other, and are such as to prevent a free mutual rotation of said body portions over an angle larger than 180°.

The pin 22, the slot 21, as well as the spring 25 constitute the second hole-pin coupling, which makes it possible a mutual translational movement of the body portions 13 and 14 to take place on a plane perpendicular to the same coupling, and at an angle larger than 180°.

The first couple of flanges 16 and the second couple of flanges 24 are provided with mutually opposite, complementarily shaped side surfaces. More precisely, said side surfaces comprise straight portions 29 and 30 leaving from said step-shaped stop portions 26 and 27, and perform as well a limit-stop function when the articulation device is opened at 180°, the arc-circle-shaped portions 31 and 32, favouring the mutual rotation of the body portions 13 and 14.

One will thus understand that when the articulation device according to the present invention is applied to two separate elements 12 which must be capable of being shifted by rotation relatively to each other, the rotation over an angle smaller than 180°C is normally allowed and takes place by hinging on the first hole-pin coupling (17-20), with no intervention of the spring 25.

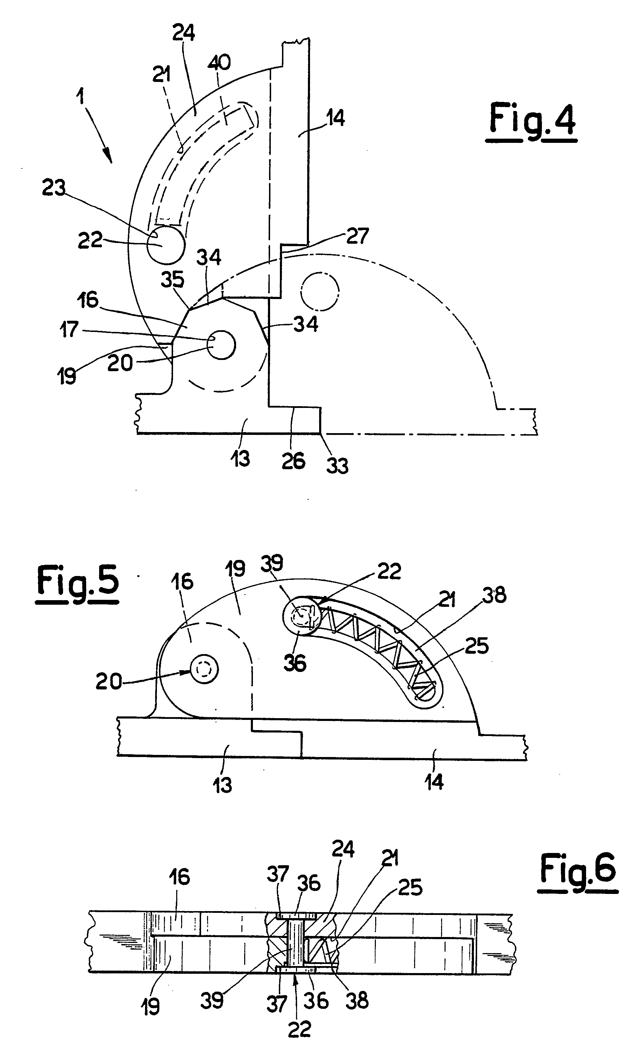

When, on the contrary, a rotation has to be realized of the two separate elements 12, i.e., of the two body portions 13 and 14, over an angle larger than 180° (Figure 3), it will be enough to act on said separate elements with such a force, as to win the resistance of the spring 25, contained inside the second hole-pin coupling (21 and 23-22), which spring is compressed, thus enabling the two separate elements 12, i.e., two body portions 13, 14, to rotate relatively to each other, by interacting with one another in correspondence of the ends of their stop portions 26 and 27, having their rotation centre in correspondence of a point 33, wherein mutual contact occurs of the same stop portions 26 and 27.

Figure 4 shows a further form of practical embodiment of the articulation device according to the present invention, wherein the elements corresponding to the elements of the figures from 1 to 3 are indicated by means of the same reference numerals.

In said device, the complementarily shaped and mutually opposite side surfaces of the couples of flanges 16 and 24 are constituted by a plurality of complementary flat surface portions 34 placed in sequence and constituting a broken line, such as to make it possible the body portions 13 and 14 to be positioned relatively to each other according to stable and preselected positions. The elastic element is a cilindrical elastomeric element 40 or the like.

It can be easily understood that, when, e.g., the body portion 14 is rotated relatively to the body portion 13 around the first hole-pin coupling (17-20) from a mutually aligned position of said two body portions, like the position shown by chain, to a mutual position at 90° of said body portions, like the positions shown by solid line, a slight compression is applied to the elastomeric element 40 during the crossing of the edges 35 comprised between the flat portions 34. The release of said compression determines the stable positioning of two mutually opposite flat surface portions 34, belonging, the one, to the body portion 14, and, the other one, to the body portion 13, and therefore a stable mutual positioning of the same body portions of the articulation device.

Figures 5 and 6 show a further form of practical embodiment of an articulation device according to the present invention having a simplified structure, wherein the same elements as of Figures 1-3 are indicated by the same reference numerals. From such a simplification, one can in fact observe that the body portions 13 and 14 are provided with a single flange only, respectively 16 and 24, and that the interposed link element 19 is affixed to said two portions by means of two hole-pin couplings, whose pins 20 and 22 are positioned by means of rivetings 36 of their ends inside relevant seats 37 provided on the same elements on their outwards-directed surfaces once that the same elements are coupled.

In the depicted example, in particular, the slot 21 has been so provided, that it results to be open on the surface opposite to the flange 24 over the whole diametrical dimension of the spring 25, as well as on its outwards-directed surface, whilst is provided with an intermediate and perimetrical step 38 in order to keep the spring 25 confined against the flange 24. In this way, an intermediate portion 39 of the pin 22, of smaller diameter, can slide inside the free space comprised between the perimetrical step 38, whilst the end riveting 36 can slide inside the slot 21 in the outwards-directed, larger-diameter portion thereof.

Also in these last forms of practical embodiments shown (in Figures 4-5) in order to exemplify the invention, the articulation device makes it possible a mutual rotation of the two body portions 13 and 14 to take place over an angle larger than 180°, as it occurs in the form of practical embodiment exemplified in Figures 1-3.

An articulation device according to the present invention makes it therefore possible a rotation stroke longer than 180° to be achieved, notwithstanding the presence of limit stop elements, which should limit such a rotation to a value smaller than that. It can be observed as well that the presence of the elastic means counteracting said rotation over an angle larger than 180° furthermore enables the two separate elements, connected to the two body portions of the device, to be positioned relatively to each other according to prefixed angles, determined by the presence of a complementary shaping of the mutually opposite surfaces of said two body portions.

## Claims

1. Articulation device applicable between two separate elements capable of being shifted relatively to each other from a position thereof in which, aligned to each other, they form an angle of 180°, to a position in which they are rotated relatively to, and approached to, each other, to form an angle smaller than 180°, characterized in that it comprises two body positions which can be affixed onto the ends of said two separate elements, with said two body portions being constrainable by means of two hole-pin couplings to a link element interposed between them, and being provided with stop portions which prevent them from freely rotating relatively to each other over an angle larger than 180°, with said link element being provided, on one hand, with an only-rotational movement relatively to a first coupling of said two couplinga, and, on the other hand, with a movement of translation on a plane perpendicular to a second coupling of said two couplings, such as to make it possible a rotation of said body portions relatively to each other to take place over an angle larger than 180°, with said translational movement being counteracted by an elastic means positioned inside a hole or a seat which is provided in at least said link element, and inside which seat a pin of said second hole-pin coupling can slide during said translational movement.

2. Articulation device according to claim 1, characterized in that said hole or seat is an at least partially through-passing slot.

3. Articulation device according to claim 1, characterized in that said two hole-pin couplings are provided on at least one flange of each one of said two body portions, wherein each one of said flanges is provided with mutually opposite side surfaces which are complementarily shaped relatively to each other, and are suitable for favouring the mutual rotation of said two body portions.

4. Articulation device according to claim 3, characterized in that on each one of said two flanges of said two body portions, at least one hole is provided, which is suitable for receiving a relevant pin of said two couplings, with said link element being provided as well with a hole capable of receiving a pin of a first one of said two hole-pin couplings, and with a slot-shaped seat for receiving a second pin of a second one of said hole-pin couplings, wherein inside said slot an elastic means is installed, which is constituted by a spring.

5. Articulation device according to claim 3, characterized in that said mutually-opposite, complementary-shaped side surfaces are constituted by a plurality of complementary flat surface portions positioned in sequence.

6. Articulation device according to claim 1, characterized in that from each one of said two body portions a couple of flanges extend, which define between them a recessed opening suitable for receiving said link element, with said hole or seat provided inside said link element being a through-slot.

7. Articulation device according to claim 1, characterized in that said elastic means is a helical spring.

8. Articulation device according to claim 1, characterized in that said elastic means is an elastomeric element.

Fig.1

Fig.2

Fig.3

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 511 263 (SAFILO)<br>* Page 1, column 2, paragraphs 6-9; page 2, column 1; figures 1-5 *<br>--- | 1-4,6,7 | G 02 C 5/22<br>E 05 D 11/10 |
| A | GB-A- 830 759 (MECCANOPTICA LEONARDO)<br>* Page 2, lines 13-72; figures 1-4 *<br>--- | 1,6,7 | |
| A | EP-A-0 191 944 (OBE-WERK OHNMACHT & BAUMGARTNER)<br>* Figure 6 *<br>----- | 1,5,7 | |

TECHNICAL FIELDS SEARCHED (Int. Cl.4)

G 02 C
E 05 D

The present search report has been drawn up for all claims

| Place of search | Date of completion of the search | Examiner |
|---|---|---|
| THE HAGUE | 10-04-1989 | NEYS B.G. |

EPO FORM 1503 03.82 (P0401)